# FASCICULE DE BREVET EUROPEEN

(11) **EP 0 852 436 B1**
(45) Date de publication et mention de la délivrance du brevet: **26.07.2000**
(21) Numéro de dépôt: 97403177.5
(22) Date de dépôt: 30.12.1997
(51) Int. Cl.: H04B 10/18, G02F 1/35

(54) **Régénérateur de solitons à très haut débit**
Solitonregenerator mit sehr hoher Datenrate
Very high data rate soliton regenerator

(30) Priorité: 06.01.1997 FR 9700044
(43) Date de publication de la demande: 08.07.1998
(73) Titulaire: ALCATEL, 75008 Paris (FR)
(72) Inventeur: Bigo, Sébastien, 91120 Palaiseau (FR); Vendrome, Gilles, 92330 Sceaux (FR)
(74) Mandataire: Lamoureux, Bernard

(56) Documents cités:
- EP-A- 0 718 992
- BIGO S ET AL: "DUAL-CONTROL NONLINEAR-OPTICAL LOOP MIRRORS FOR ALL-OPTICAL SOLITON SYNCHRONOUS MODULATION" OPTICS LETTERS, vol. 21, no. 18, 15 septembre 1996, pages 1463-1465, XP000630829
- NAKAZAWA M ET AL: "60GBIT/S WDM (20GBIT/S X 3 UNEQUALLY SPACED CHANNELS) SOLITON TRANSMISSION OVER 10000KM USING IN-LINE SYNCHRONOUS MODULATION AND OPTICAL FILTERING" ELECTRONICS LETTERS, vol. 32, no. 18, 29 août 1996, pages 1686-1688, XP000637832

## Description

La présente invention a pour objet régénérateur de solitons à très haut débit, ainsi qu'un procédé de régénération de solitons à très haut débit.

La transmission d'impulsions solitons ou solitons, d'enveloppe sécante hyperbolique, dans la partie d'une fibre optique à dispersion anormale est un phénomène connu. La transmission de solitons dits "noirs", constitués par des trous impulsionnels dans un signal continu, dans la partie à dispersion normale d'une fibre optique est aussi connue; dans ce cas, les solitons présentant une longueur d'onde telle qu'ils se propagent avec une dispersion chromatique négative. Dans le cas des solitons "blancs" comme dans celui des solitons "noirs", on utilise pour compenser la dispersion du signal optique la non-linéarité dans la partie correspondante de la fibre. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, comme décrit par exemple dans l'article de J. P. Gordon et H. A. Haus, Optical Letters, vol. 11 n° 10 pages 665-667. Cet effet, appelé effet Gordon-Haus, impose une limite théorique à la qualité ou au débit des transmissions par solitons.

Du fait des déformations induites sur les solitons par la transmission, et notamment de la gigue induite par l'effet Gordon-Haus, des efforts considérables sont nécessaires pour assurer la transmission du signal codé par des solitons. Une des solutions satisfaisantes, sinon la seule, pour assurer une transmission sur des distances virtuellement infinies consiste à assurer une modulation synchrone des solitons. Ceci nécessite d'une part d'assurer la modulation des solitons, et d'autre part, pour synchroniser le modulateur, de récupérer la fréquence d'information des solitons. Ces deux fonctions, modulation et récupération d'horloge, doivent opérer à la fréquence d'information des solitons, ce qui rend particulièrement utiles des solutions tout optique, i.e. contrôlées optiquement. En particulier, pour assurer la modulation tout optique du signal soliton, ceci implique donc de produire ou récupérer une sinusoïde optique à la fréquence correspondante.

Divers systèmes ont aussi été proposés pour assurer la production d'une sinusoïde optique à la fréquence bit. Les moyens électro-optiques conventionnels, tels qu'une diode laser modulée directement, ou l'utilisation d'une modulation externe par un interféromètre de Mach-Zender, impliquent d'utiliser des composants électroniques haute fréquence, ce qui augmente le coût des dispositifs, et limite la fréquence possible, à environ 40 Gbit/s.

Pour des systèmes de transmissions micro-ondes, et en vue de réduire le bruit de phase de lasers à semi-conducteurs, un article de U. Gliese et al., IEEE Photonic Technology Letters, vol. 4 n° 8, propose d'utiliser une boucle à verrouillage de phase optique (OPLL) pour la génération de signaux micro-ondes dans la gamme 3-18 GHz. Le signal de battement de deux sources lasers, dont l'une est asservie, est comparé au signal de l'oscillateur micro-onde de référence. Le signal de différence de phase résultant est utilisé pour contrôler le courant d'alimentation de la source laser asservie. On assure ainsi le verrouillage du signal de battement sur l'oscillateur de référence, malgré le bruit de phase des lasers.

Un article de H. Bülow, IEE Electronics Letters, vol. 31 n° 22 décrit un principe de synchronisation optoélectronique pour un démultiplexeur optique. Un signal démultiplexé à une fréquence sous harmonique est extrait d'un signal hyperfréquence multiplexé en utilisant comme commutateur au rythme de la fréquence sous-harmonique un miroir non linéaire en boucle (NOLM). L'article propose d'utiliser une conversion optoélectronique et une boucle à verrouillage de phase électronique pour acquérir et suivre le signal démultiplexé. Un des buts poursuivis dans cet article est d'éviter l'utilisation d'un détecteur de phase rapide, tel que celui de l'article de Gliese et al.

Un article de K. L. Hall et al., IEEE Photonics Technology Letters, vol. 7 n° 8 décrit une boucle à verrouillage de phase électrooptique, utilisant un miroir non linéaire en boucle comme comparateur tout optique de la phase des bits. Une source de référence est présentée ne entrée du NOLM. Une source laser asservie en tension est couplée dans le NOLM. Une mesure de puissance en sortie du NOLM est comparée à une tension de référence pour asservir la tension de la source asservie.

La présente invention propose une solution originale et simple au problème de la régénération des solitons par modulation synchrone. Elle permet de n'utiliser que des composants électroniques basse fréquence, pour des transmissions avec un potentiel de plusieurs centaines de Gbit/s. En outre, les composants de l'invention sont qualifiés pour être submersibles et peuvent donc être utilisés sans problèmes dans des systèmes de transmission transocéaniques.

Plus précisément, l'invention propose un régénérateur de signal soliton comprenant un miroir non-linéaire en boucle recevant le signal soliton et assurant sa modulation par un contrôle, et un dispositif de génération du contrôle par battement de deux sources optiques, dans lequel la fréquence de l'une au moins des deux sources est variable.

On peut prévoir des moyens d'asservissement de la fréquence variable de l'une au moins des deux sources en fonction de la puissance moyenne du signal soliton modulé.

On peut aussi prévoir des moyens d'asservissement de la fréquence variable de l'une au moins des deux sources en fonction de la différence entre les puissances moyennes des signaux soliton modulés transmis et réfléchi par le miroir non-linéaire en boucle.

On pourrait enfin asservir la fréquence variable de l'une au moins des deux sources grâce à une boucle de verrouillage de phase optique du signal de battement de deux sources optiques sur le signal soliton.

Il est possible d'ajouter à tous ces systèmes une source à une fréquence faible devant la fréquence d'information du signal soliton, le signal provenant de la source étant introduit dans le contrôle, et des moyens de détection synchrone.

Pour cela, le régénérateur comprend de préférence un mélangeur assurant le mélange du signal provenant de la source et du signal correspondant à la puissance moyenne du signal soliton modulé ou à la différence des puissances moyennes, et un filtre assurant le filtrage passe-bas du signal mélangé.

Les deux sources optiques sont avantageusement des sources laser, la fréquence l'une au moins des deux sources étant asservie par commande de son courant d'alimentation ou de sa température de consigne.

La fréquence du contrôle peut être égale à la moitié de la fréquence bit du signal soliton.

On peut aussi prévoir que le miroir non linéaire en boucle présente un coupleur d'entrée à trois entrés, et que la fréquence du contrôle est égale à la fréquence bit du signal soliton.

Le miroir non-linéaire en boucle peut comprendre un milieu fortement non-linéaire, tel qu'une fibre chalcogénide ou une fibre à coeur dopé au germanium.

Dans un mode de réalisation, le dispositif de génération du contrôle fournit deux contrôles en opposition de phase, qui sont couplés dans le miroir en des positions symétriques par rapport à un coupleur d'entrée du miroir.

L'invention concerne aussi un procédé de régénération à haut débit d'un signal soliton, par modulation synchrone dans un miroir non-linéaire en boucle, en générant le contrôle par battement de deux sources optiques, la fréquence l'une au moins des deux sources étant variable.

La fréquence variable de l'une au moins des deux sources peut être asservie en fonction de la puissance moyenne du signal soliton modulé, ou en fonction de la différence entre les puissances moyennes des signaux soliton modulés transmis et réfléchi par le miroir non-linéaire en boucle, ou encore grâce à une boucle de verrouillage de phase optique du signal de battement de deux sources optiques sur le signal soliton.

On peut introduire dans le contrôle un signal à une fréquence faible devant la fréquence d'information du signal soliton, et procéder à une détection synchrone.

Les deux sources peuvent être des sources laser, et on peut asservir la fréquence de l'une au moins des deux sources par commande de son courant d'alimentation ou de sa température de consigne.

De préférence, la fréquence du contrôle est égale à la moitié de la fréquence bit du signal soliton. On peut aussi prévoir que le miroir non linéaire en boucle présente un coupleur d'entrée à trois entrés, la fréquence du contrôle étant alors égale à la fréquence bit du signal soliton.

Le miroir non-linéaire en boucle comprend avantageusement un milieu fortement non-linéaire, tel qu'une fibre chalcogénide ou une fibre à coeur dopé au germanium.

On peut coupler deux contrôles en opposition de phase dans le miroir en des positions symétriques par rapport à un coupleur d'entrée du miroir.

D'autres caractéristiques et avantages de l'invention apparaîtront à la lecture de la description qui suit de modes de réalisation de l'invention, donnés à titre d'exemple et en référence aux dessins annexés qui montrent:
- figure 1 un schéma de principe d'un régénérateur selon l'invention;
- figure 2 un schéma de principe d'un régénérateur selon un deuxième mode de réalisation de l'invention;
- figure 3 un schéma d'une partie d'un régénérateur selon un troisième mode de réalisation de l'invention;
- figure 4 un schéma de principe d'un régénérateur selon un quatrième mode de réalisation de l'invention;
- figure 5 un schéma de principe d'un régénérateur selon un cinquième mode de réalisation de l'invention;
- figure 6 un schéma de principe d'un régénérateur selon un sixième mode de réalisation de l'invention.

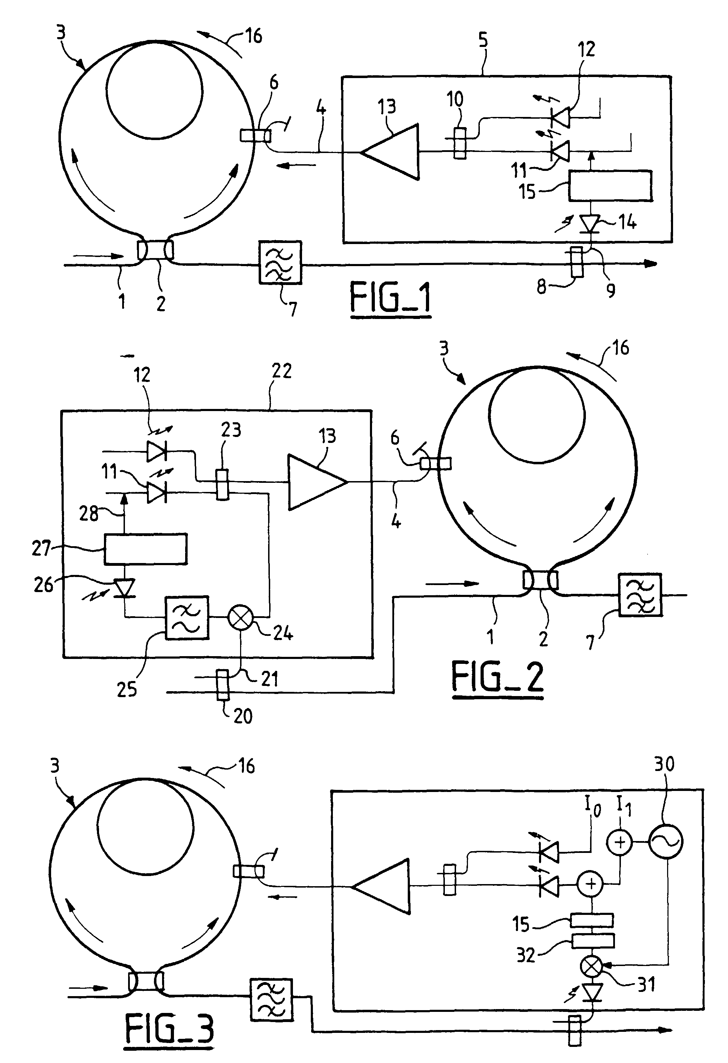

La figure 1 montre un schéma de principe d'un régénérateur selon l'invention. Le régénérateur de la figure 1 reçoit sur une fibre 1 un signal soliton à une fréquence bit f₀, à régénérer par modulation synchrone. Ce signal est transmis au coupleur optique 2 d'entrée d'un- miroir non-linéaire 3 ("non-linear optical mirror" ou, NOLM) à fibre optique. Le coupleur 2 présente un taux de couplage η/1-η. Le signal soliton est couplé dans le NOLM 3, et est séparé en deux signaux se propageant en sens inverse, comme indiqué par les flèches, et est recombiné au niveau du coupleur 2, et est réfléchi en sortie du coupleur 2.

Le NOLM assure la modulation du signal soliton par un signal optique de contrôle, ou "contrôle" dans la suite, provenant par une fibre 4 d'un dispositif 5 de génération d'un contrôle. Le contrôle est injecté dans le NOLM par un coupleur 6, dans le sens indiqué par la flèche 16. Pour plus de précisions sur le fonctionnement d'un NOLM comme modulateur, on se rapportera avantageusement à l'article de S. Bigo et al., IEE Electronics Letters, vol. 31 n° 2, p. 2191-2193, ou à l'article de S. Bigo et al., Optics Letters, vol. 21 n° 18, p. 1463-1465.

Typiquement, le NOLM présente une longueur de l'ordre de 10 km, et le contrôle est un signal sinusoïdal à une fréquence f₀/2, d'une puissance de l'ordre de 100 mW. Comme expliqué plus haut, dans un tel dispositif, un des problèmes consiste à obtenir un contrôle approprié.

Pour cela, l'invention propose, dans les modes de réalisation des figures 1 et 3 à 6, d'utiliser le NOLM, à la fois pour ses propriétés de modulateur et pour ses propriétés de comparateur de phase optique. Le NOLM assure alors le verrouillage de la phase du contrôle sur le signal soliton. Le verrouillage de la fréquence du contrôle sur la fréquence bit, ou sur la moitié de celle-ci s'effectue simplement grâce à la mesure de la puissance moyenne du signal soliton modulé par le NOLM, et à une boucle de contre-réaction appropriée.

Le régénérateur de la figure 1 présente, en aval du coupleur 2, un filtre passe bande 7, qui assure d'une part le filtrage du contrôle et du bruit en dehors du ou des canaux solitons, et d'autre part la correction des instabilités d'amplitudes induites sur le train de solitons par la modulation.

Le régénérateur présente en aval du filtre 7 un coupleur 8 avec un taux de couplage typique de quelques pourcents, par exemple un coupleur 10/90, qui couple la fibre 1 avec un tronçon de fibre 9, reliée au dispositif 5 de génération du contrôle.

Le dispositif 5 utilise, pour générer le contrôle, le battement de deux sources laser continues, présentant des fréquences décalées de la fréquence f₀/2 du contrôle. Le dispositif 5 présente donc un combineur optique à deux entrées 10, qui reçoit en entrée les signaux fournis par deux sources lasers 11 et 12. La sortie du combineur 10 fournit le signal de battement des deux sources lasers à un amplificateur 13, par exemple un amplificateur optique à fibre dopée à l'erbium. La sortie de l'amplificateur 13 est reliée à la fibre 4, de sorte que le signal de battement amplifié est fourni au coupleur 6 pour servir de signal de modulation dans le NOLM.

Pour générer un signal de modulation approprié, on asservit la fréquence de l'une ou des deux sources lasers 11 et 12; on peut par exemple utiliser une commande de la fréquence de la ou des sources laser par le courant, ou par la température de consigne. Dans le montage de la figure 1, on utilise un pilotage de la source laser 11 par son courant d'alimentation. La source 12 est donc alimentée par un courant I₀ constant. On asservit le courant I₁ d'alimentation de la source laser 11 en fonction de la puissance moyenne du signal soliton modulé, mesurée par un détecteur basse fréquence 14 sur la fibre 9, par exemple une simple diode. Le signal électrique basse fréquence fourni en sortie du sortie du détecteur 14, appelé aussi signal d'erreur, est transmis à une électronique de contrôle 15 qui commande l'intensité du courant I₁ d'alimentation de la source laser 11. On constitue ainsi une boucle à verrouillage de phase optique qui permet de commander le courant d'alimentation de la source laser 11. Dans cette boucle, le NOLM est utilisé comme comparateur de phase optique.

Le fonctionnement du régénérateur de la figure 1 est le suivant. Le signal soliton arrivant dans le NOLM 3 est modulé par le contrôle fourni par le dispositif 5. Le signal soliton modulé sortant du NOLM est filtré par le filtre 7, et une partie en est prélevée par le coupleur 8 pour assurer le pilotage du dispositif 5 de génération du contrôle. Le régénérateur assure une modulation synchrone du signal soliton reçu, sans nécessiter de composant électronique haute fréquence. De fait, il suffit pour piloter le dispositif 5 de connaître la puissance moyenne du signal soliton modulé, qui est maximale lorsque la fenêtre de modulation est bien calée sur les solitons reçus. Le calage en phase et en fréquence du régénérateur est optimum lorsque la puissance moyenne du signal soliton modulé est maximale.

Le système fonctionne de façon satisfaisante lorsque le temps de réponse de la boucle à verrouillage de phase est inférieur au temps caractéristique des instabilités du dispositif 5 de génération du contrôle. Le temps de réponse de la boucle à verrouillage de phase dépend essentiellement du temps de latence du NOLM, i.e. en fait de la longueur de la fibre qui le constitue. Le temps caractéristique des instabilités du dispositif 5 dépend de la largeur de raie des sources laser utilisées. Dans le cas cité plus haut d'un NOLM d'une longueur de l'ordre de 10 km, de sources laser d'une largeur de raie de l'ordre de 100 kHz suffisent pour assurer un fonctionnement correct du régénérateur. Dans un tel cas, le temps de latence du NOLM est de l'ordre de 50 µs, et le produit de ce temps de latence par la largeur de raie des lasers est inférieur à 5, ce qui est suffisant pour assurer le verrouillage.

La figure 2 montre un schéma de principe d'un deuxième mode de réalisation de l'invention, dans lequel la fréquence d'une des sources laser est asservie à l'aide d'une boucle à verrouillage de phase optique ("optical phase lock loop" ou OPLL). Le dispositif de la figure 2 présente, à la place des éléments 8, 9 et 5 de la figure 1, les éléments suivants. En aval du NOLM, un coupleur 20 couple la fibre 1 à un tronçon de fibre 21. Le signal de la fibre 21, prélevé sur le signal soliton à moduler, est transmis au dispositif de génération du signal 22. Celui ci comprend, comme le dispositif 5 de la figure 1, deux sources laser 11 et 12 similaires aux sources de la figure 1. La deuxième source 11 est asservie, par exemple par son courant d'alimentation. Son signal optique de sortie présente une fréquence décalée de f₀/2 par rapport au signal de la source 12. Les signaux de sortie des sources 11 et 12 sont fournis à un combineur optique 23 à deux entrées. Comme sur la figure 1, une des sorties du combineur 23 est transmise à un amplificateur 13; la sortie de l'amplificateur 13 est reliée à la fibre 4, de sorte que le signal de battement amplifié est fourni au coupleur 6 pour servir de signal de modulation ou contrôle dans le NOLM. L'autre sortie du combineur 23 est reliée à un comparateur de phase optique 24. On peut par exemple utiliser pour la comparaison de phase optique, la modulation du gain croisée, le mélange quatre ondes dans un amplificateur semiconducteur, le mélange quatre ondes dans une fibre, ou un NOLM. Le comparateur de phase optique 24 reçoit par ailleurs un signal de référence avec une composante f₀; ce signal provient de la fibre 21, et est simplement dérivé du signal soliton grâce au coupleur 20. Le signal de sortie du comparateur de phase optique 24 est fourni à un filtre passe-bas de boucle 25, dont la sortie est fournie une diode basse fréquence 26. Le signal électrique de la diode 26 pilote une électronique de contrôle 27 du courant d'alimentation de la source 11. Celle-ci commande la fréquence optique de la source 11, comme symbolisé par la flèche 28. L'ensemble du combineur 23, du comparateur de phase optique 24, du filtre passe-bas de boucle 25, de la diode 26 et de l'électronique 27 constitue une boucle à verrouillage de phase optique.

On pourrait aussi prélever le signal de battement non pas en sortie du combineur 23, mais en aval de l'amplificateur 13, si besoin est. Le filtre 25 n'est pas indispensable dans la mesure où la diode basse fréquence 26 peut faire office de filtre passe-bas.

Le montage de la figure 2, par rapport à celui de la figure 1, améliore la qualité du signal d'erreur transmis à l'électronique de contrôle du courant I₁, et assure un meilleur fonctionnement du régénérateur. Dans le montage de la figure 2, on n'utilise pas les propriétés de comparateur de phase du NOLM, la comparaison de phase de la boucle à verrouillage de phase étant assurée par le comparateur de phase optique 24.

La figure 3 montre un schéma de principe d'un régénérateur selon un troisième mode de réalisation de l'invention. Par rapport au montage de la figure 1, le montage de la figure 3 présente les différences suivantes. Une source 30 à une fréquence f faible devant la fréquence bit f₀ est ajoutée au courant I1. Par ailleurs, entre le détecteur basse fréquence 14 et l'électronique de contrôle 15, on insère un mélangeur 31, et un filtre passe bas 32. Le mélangeur reçoit aussi un signal en provenance de la source 30.

Le fonctionnement du régénérateur de la figure 3 est sensiblement analogue à celui de la figure 1. Toutefois, le signal optique émis par la source laser 11 présente en outre une composante à la fréquence f. Dans la mesure où la fréquence f est très petite devant la fréquence bit f₀ des solitons, ceci n'est pas gênant. Le mélangeur 31 mélange le signal basse fréquence fourni par le détecteur 14 et le signal à la fréquence f. Le filtre 32 élimine dans le signal fourni par le mélangeur le bruit, ce qui améliore la qualité du signal d'erreur transmis à l'électronique de contrôle 15. On assure ainsi un meilleur fonctionnement du régénérateur.

Le principe de détection synchrone décrit en référence à ia figure 3 pourrait aussi être appliqué au dispositif de la figure 2, mutatis mutandis.

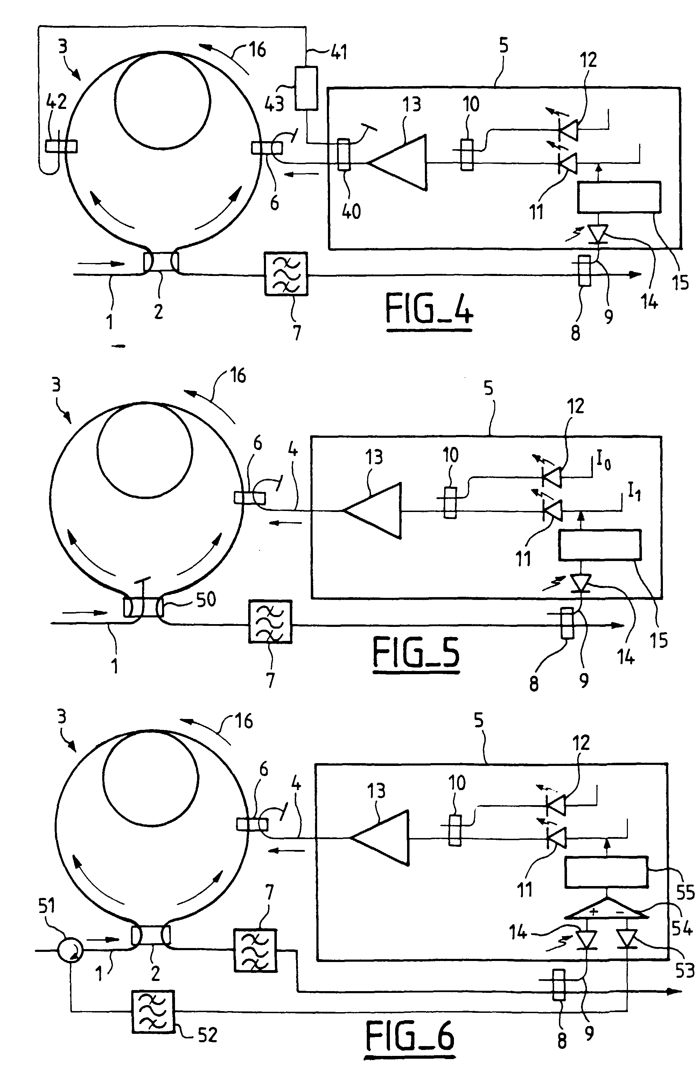

La figure 4 montre un schéma de principe d'un régénérateur selon un quatrième mode de réalisation de l'invention; par rapport à celui de la figure 1, le régénérateur de la figure 4 présente les différences suivantes. En aval de l'amplificateur 13, on dispose un coupleur 40 présentant un taux de couplage 50/50, qui couple dans une fibre 41 un contrôle formé de la moitié du signal de sortie de l'amplificateur. Le contrôle couplé dans la fibre 41 est couplé dans le NOLM par un coupleur 42, symétrique du coupleur 6, dans le sens de propagation inverse du contrôle couplé dans le NOLM par le coupleur 6. Par ailleurs, on prévoit des moyens assurant que les deux contrôles couplés dans le NOLM par les coupleurs 6 et 42 sont en opposition de phase: on peut pour cela prévoir une différence appropriée entre la longueur de fibre d'une part entre les coupleurs 40 et 6, et d'autre part entre les coupleurs 40 et 42. On peut aussi prévoir une ligne à retard optique 43 sur la fibre entre les coupleurs 40 et 6, ou entre les coupleurs 40 et 42.

Le fonctionnement du régénérateur de la figure 4 est analogue à celui de la figure 1, à l'exception du fonctionnement du NOLM. Pour plus de précision sur le fonctionnement du NOLM dans la configuration de la figure 4, on pourra consulter l'article de S. Bigo et al., Optics Letters, vol. 21 n° 18, p. 1463-1465. Le régénérateur de la figure 4 permet d'éviter les effets de phase induits par le NOLM, qui pourraient s'avérer gênants dans certains cas pour la propagation des solitons. De fait, dans l'expression du champ du signal modulé par un NOLM, on trouve un terme de phase, qui est une exponentielle complexe de la demi-somme des phases des signaux se propageant dans le NOLM dans les deux directions; la somme de ces phases est nulle dans la mesure où l'on prévoit que les deux contrôles sont en opposition de phase.

De nouveau, on peut utiliser dans le régénérateur de la figure 4 les éléments décrits en référence aux figures 2 et 3.

La figure 5 montre un schéma de principe d'un régénérateur selon un cinquième mode de réalisation de l'invention. Par rapport à celui de la figure 1, le régénérateur de la figure 5 présente les différences suivantes. Le coupleur 50 d'entrée du NOLM est un coupleur 3/3, au lieu d'un coupleur 2/2 comme le coupleur 2 de la figure 2. Le signal soliton à moduler arrive sur l'entrée du milieu du coupleur 50. La boucle du NOLM est reliée aux première et troisième sortie du coupleur, et le signal modulé est transmis par la troisième entrée du coupleur. On utilise pour le montage de la figure 5 une différence de fréquence de f0 entre les deux sources laser, et on fournit donc un contrôle à la fréquence bit des solitons. Le fonctionnement d'un NOLM dans un tel montage est par exemple décrit dans une communication de D. Sandel et al., Optical Fibers Communications 1994, FG2 p. 310.

Le principe du fonctionnement du dispositif de la figure 5 est identique à celui de la figure 1, à l'exception de la modulation en intensité induite par le NOLM, qui n'est pas au double de la fréquence du contrôle mais à la fréquence du contrôle.

De nouveau, on peut utiliser les éléments des figures 2, 3, et 4 aussi dans un régénérateur du type de celui de la figure 5.

La figure 6 montre un schéma de principe d'un régénérateur selon un sixième mode de réalisation de l'invention. Par rapport à celui de la figure 1, le régénérateur de la figure 6 présente les différences suivantes. On prévoit en aval du NOLM un circulateur 55, qui prélève le signal réfléchi par le NOLM, et le transmet vers un filtre 56, analogue au filtre 7 de la figure 1. Le signal de sortie du filtre 7 est transmis à un détecteur basse fréquence 53, analogue au détecteur 14 de la figure 1. Les signaux électriques basse fréquence fournis par les détecteurs 14 et 53 sont comparés par un comparateur 54, et le signal d'erreur en sortie du comparateur 54 est transmis à une électronique de contrôle 55, qui commande le courant I₁ de la source laser 11.

Le fonctionnement du régénérateur de la figure 6 est analogue à celui du régénérateur de la figure 1. Dans le régénérateur de la figure 1, le signal d'erreur provenant du détecteur basse fréquence 14 doit être maximisé. Dans le montage de la figure 6, le signal d'erreur correspond à la différence des signaux réfléchis et transmis par le NOLM, et présente donc un signe. Il est possible dès lors dans l'électronique de contrôle 55, de connaître le sens de variation du courant I₁, en fonction de la valeur du signal d'erreur, ce qui n'était pas le cas pour l'électronique de contrôle 15 de la figure 1. Le montage de la figure 6 permet donc de simplifier la commande du courant.

Pour améliorer le fonctionnement du dispositif de la figure 6, on adapte la puissance de sortie du contrôle ou des contrôles de sorte à assurer, dans la mesure du possible, que les puissances transmise et réfléchie par le NOLM sont sensiblement égales. On peut pour cela travailler à une puissance du contrôle égale à la moitié de la puissance du contrôle assurant une commutation totale par le NOLM.

On peut encore utiliser dans le montage de la figure 6 les solutions décrites dans en référence aux figure 3, 4, et 5. A l'évidence, dans le cas de la figure 6, le circulateur serait branché sur l'entrée centrale du coupleur 3/3.

Bien entendu, la présente invention n'est pas limitée aux exemples et modes de réalisation décrits et représentés, mais elle est susceptible de nombreuses variantes.

Ainsi, sur les figures 1 à 4 et 6, on a représenté le cas le plus simple, où le contrôle du NOLM présente une fréquence f₀/2. Il est clair que l'on pourrait aussi utiliser un signal de fréquence f₀, un soliton n'étant alors modulé dans le NOLM que pour une alternance sur deux du contrôle. Ceci ne changerait rien aux montages de ces figures, si ce n'est la fréquence des sources lasers.

Le régénérateur de la figure 1, et celui des autres figures comprend comme modulateur un NOLM à une fibre. On peut utiliser comme modulateur tout autre type de NOLM, i.e. tout interféromètre de Sagnac comprenant un milieu non linéaire. L'interféromètre peut comprendre une fibre ou un autre milieu non-linéaire.

Ainsi, on pourrait utiliser un NOLM formé d'une fibre avec une non-linéarité plus marquée, comme une fibre chalcogénide ou une fibre dont le coeur est dopé au germanium. Par rapport au régénérateur de la figure 1, une telle fibre avec une non-linéarité plus marquée permet de diminuer la longueur de la boucle du NOLM. L'utilisation d'une fibre chalcogénide permettrait de diminuer cette longueur d'un facteur de l'ordre de 100, tandis que l'utilisation d'une fibre dont le coeur est dopé au germanium permettrait de diminuer cette longueur d'un facteur de l'ordre de 10.

Cette diminution de longueur permet de réduire le temps de latence dans le NOLM. Ceci diminue la contrainte sur la qualité du dispositif de génération du contrôle du NOLM: on peut, avec des temps de latence plus faibles, employer un dispositif de génération du contrôle ayant des instabilité de temps caractéristique plus élevé. Dans le cas d'un régénérateur du type de la figure 1, ceci signifie que l'on peut utiliser des lasers dont la largeur de raie est plus importante. Pour un NOLM à une fibre chalcogénide, de longueur de l'ordre de 0,1 km, on obtient un temps de latence de l'ordre de 0,5 µs, et on peut donc utiliser des largeurs de raie de l'ordre de 10 MHz. Pour un NOLM avec une fibre dont le coeur est dopé au germanium, de longueur de l'ordre de 1 km, le temps de latence est de l'ordre de 5 µs et la largeur de raie des lasers peut être de l'ordre de 1 MHz.

## Revendications

1. Régénérateur de signal soliton comprenant un miroir non-linéaire en boucle (3) recevant le signal soliton et assurant sa modulation par un contrôle, et caractérisé en ce qu'il comprend un dispositif de génération (5) du contrôle par battement de deux sources optiques (11, 12), dans lequel la fréquence de l'une au moins des deux sources est variable.

2. Régénérateur selon la revendication 1, caractérisé par des moyens d'asservissement de la fréquence variable de l'une au moins des deux sources en fonction de la puissance moyenne du signal soliton modulé.

3. Régénérateur selon la revendication 1, caractérisé par des moyens d'asservissement de la fréquence variable de l'une au moins des deux sources en fonction de la différence entre les puissances moyennes des signaux soliton modulés transmis et réfléchi par le miroir non-linéaire en boucle.

4. Régénérateur selon la revendication 1, caractérisé en ce que la fréquence variable de l'une au moins des deux sources est asservie grâce à une boucle de verrouillage de phase optique (29) du signal de battement de deux sources optiques (11, 12) sur le signal soliton.

5. Régénérateur selon l'une des revendication 1 à 4, comprenant en outre une source (30) à une fréquence faible devant la fréquence d'information du signal soliton, le signal provenant de la source étant introduit dans le contrôle, et des moyens de détection synchrone.

6. Régénérateur selon la revendication 5, comprenant un mélangeur (31) assurant le mélange du signal provenant de la source (30) et du signal correspondant à la puissance moyenne du signal soliton modulé ou à la différence des puissances moyennes, et un filtre (32) assurant le filtrage passe-bas du signal mélangé.

7. Régénérateur selon l'une des revendications 1 à 6, caractérisé en ce que les deux sources optiques sont des sources laser, la fréquence l'une au moins des deux sources étant asservie par commande de son courant d'alimentation ou de sa température de consigne.

8. Régénérateur selon l'une des revendications 1 à 7, caractérisé en ce que la fréquence du contrôle est égale à la moitié de la fréquence bit du signal soliton.

9. Régénérateur selon l'une des revendications 1 à 7, caractérisé en ce que le miroir non linéaire en boucle présence un coupleur d'entrée à trois entrés (50), et en ce que la fréquence du contrôle est égale à la fréquence bit du signal soliton.

10. Régénérateur selon l'une des revendications 1 à 9, caractérisé en ce que le miroir non-linéaire en boucle comprend un milieu fortement non-linéaire, tel qu'une fibre chalcogénide ou une fibre à coeur dopé au germanium.

11. Régénérateur selon l'une des revendications 1 à 10, caractérisé en ce que le dispositif de génération (5) du contrôle fournit deux contrôles en opposition de phase, qui sont couplés dans le miroir en des positions (6, 42) symétriques par rapport à un coupleur d'entrée (2) du miroir.

12. Procédé de régénération à haut débit d'un signal soliton, par modulation synchrone dans un miroir non-linéaire en boucle (3), caractérisé par la génération du contrôle par battement de deux sources optiques (11, 12), la fréquence de l'une au moins des deux sources étant variable.

13. Procédé selon la revendication 12, caractérisé en ce que la fréquence variable de l'une au moins des deux sources est asservie en fonction de la puissance moyenne du signal soliton modulé.

14. Procédé selon la revendication 12, caractérisé en ce que la fréquence variable de l'une au moins des deux sources est asservie en fonction de la différence entre les puissances moyennes des signaux soliton modulés transmis et réfléchi par le miroir non-linéaire en boucle.

15. Procédé selon la revendication 12, caractérisé en ce que la fréquence variable de l'une au moins des deux sources est asservie grâce à une boucle de verrouillage de phase optique (29) du signal de battement de deux sources optiques (11, 12) sur le signal soliton.

16. Procédé selon l'une des revendication 12 à 15, dans lequel on introduit dans le contrôle un signal à une fréquence faible devant la fréquence d'information du signal soliton, et dans lequel on procède à une détection synchrone.

17. Procédé selon l'une des revendications 12 à 16, caractérisé en ce que les deux sources optiques sont des sources laser, et en ce que l'on asservit la fréquence de l'une au moins des deux sources par commande de son courant d'alimentation ou de sa température de consigne.

18. Procédé selon l'une des revendications 12 à 17, caractérisé en ce que la fréquence du contrôle est égale à la moitié de la fréquence bit du signal soliton.

19. Procédé selon l'une des revendications 12 à 17, caractérisé en ce que le miroir non linéaire en boucle présente un coupleur d'entrée à trois entrés (50), la fréquence du contrôle étant égale à la fréquence bit du signal soliton.

20. Procédé selon l'une des revendications 12 à 19, caractérisé en ce que le miroir non-linéaire en boucle comprend un milieu fortement non-linéaire, tel qu'une fibre chalcogénide ou une fibre à coeur dopé au germanium.

21. Procédé selon l'une des revendications 12 à 20, caractérisé en ce que l'on couple deux contrôles en opposition de phase dans le miroir en des positions (6, 42) symétriques par rapport à un coupleur d'entrée (2) du miroir.

## Claims

1. A soliton signal regenerator comprising a non-linear optical loop mirror (3) receiving the soliton signal and modulating it with a control signal, the regenerator being characterized in that it comprises a device (5) for generating the control by beats between two optical light sources (11, 12) in which the frequency of at least one of the two sources is variable.

2. A regenerator according to claim 1, characterized by means for servo-controlling the variable frequency of at least one of the two sources as a function of the mean power of the modulated soliton signal.

3. A regenerator according to claim 1, characterized by means for servo-controlling the variable frequency of at least one of the two sources as a function of the difference between the mean powers of the modulated soliton signals as transmitted and as reflected by the non-linear optical loop mirror.

4. A regenerator according to claim 1, characterized in that the variable frequency of at least one of the two sources is servo-controlled by an optical phase-lock loop (29) for locking the beat signal from the two light sources (11, 12) on the soliton signal.

5. A regenerator according to any one of claims 1 to 4, further including both a source (30) at a frequency that is small compared with the data frequency of the soliton signal, the signal from the source being included in the control signal, and synchronous detection means.

6. A regenerator according to claim 5, including a mixer (31) for mixing the signal from the source (30) with the signal corresponding to the mean power of the modulated soliton signal or to the mean power difference, and a filter (32) for performing lowpass filtering on the mixed signal.

7. A regenerator according to any one of claims 1 to 6, characterized in that both light sources are laser sources, with the frequency of at least one of the two sources being servo-controlled by controlling its reference temperature or power supply current.

8. A regenerator according to any one of claims 1 to 7, characterized in that the frequency of the control signal is equal to half the bit frequency of the soliton signal.

9. A regenerator according to any one of claims 1 to 7, characterized in that the non-linear loop mirror has a three-inlet inlet coupler (50), and in that the frequency of the control signal is equal to the bit frequency of the soliton signal.

10. A regenerator according to any one of claims 1 to 9, characterized in that the non-linear loop mirror has a medium that is highly non-linear, such as a chalcogenide fiber or a fiber whose core is doped with germanium.

11. A regenerator according to any one of claims 1 to 10, characterized in that the device (5) for generating the control signal supplies two control signals in phase opposition, which are coupled into the mirror at positions (6, 42) that are symmetrical relative to the inlet coupler (2) of the mirror.

12. A method of regenerating a high rate soliton signal by synchronous modulation in a non-linear loop mirror (3), the method being characterized by the control signal being generated by beating two light sources (11, 12), the frequency of at least one of the two sources being variable.

13. A method according to claim 12, characterized in that the variable frequency of at least one of the two sources is servo-controlled as a function of the mean power of the modulated soliton signal.

14. A method according to claim 12, characterized in that the variable frequency of at least one of the two sources is servo-controlled as a function of the difference between the mean powers of the modulated soliton signals respectively transmitted and reflected by the non-linear loop mirror.

15. A method according to claim 12, characterized in that the variable frequency of at least one of the two sources is servo-controlled by an optical phase-lock loop (29) for locking the beat signal from the two light sources (11, 12) onto the soliton signal.

16. A method according to any one of claims 12 to 15, in which a signal of low frequency compared with the data frequency of the soliton signal is injected into the control signal, and in which synchronous detection is performed.

17. A method according to any one of claims 12 to 16, characterized in that the two light sources are laser sources, and in that the frequency of at least one of the two sources is servo-controlled by controlling its reference temperature or its power supply current.

18. A method according to any one of claims 12 to 17, characterized in that the frequency of the control signal is equal to half the bit frequency of the soliton signal.

19. A method according to any one of claims 12 to 17, characterized in that the non-linear loop mirror has a three-inlet inlet coupler (50), the frequency of the control signal being equal to the bit frequency of the soliton signal.

20. A method according to any one of claims 12 to 19, characterized in that the non-linear loop mirror has a medium that is highly non-linear, such as a chalcogenide fiber or a fiber whose core is doped with germanium.

21. A method according to any one of claims 12 to 20, characterized in that two control signals are coupled in phase opposition into the mirror at positions (6, 42) that are symmetrical relative to an inlet coupler (2) of the mirror.

## Patentansprüche

1. Regenerator für ein Solitonensignal, der einen schleifenartigen nichtlinearen optischen Spiegel (3), der das Solitonensignal empfängt und dessen Modulation durch ein Steuersignal gewährleistet, umfaßt, dadurch gekennzeichnet, daß er eine Vorrichtung (5) zur Erzeugung des Steuersignals durch eine Schwebung von zwei optischen Quellen (11, 12) umfaßt, wobei die Frequenz wenigstens einer der zwei Quellen variabel ist.

2. Regenerator nach Anspruch 1, gekennzeichnet durch Mittel zum Regeln der variablen Frequenz der wenigstens einen der zwei Quellen in Abhängigkeit von der mittleren Leistung des modulierten Solitonensignals.

3. Regenerator nach Anspruch 1, gekennzeichnet durch Mittel zum Regeln der variablen Frequenz der wenigstens einen der zwei Quellen in Abhängigkeit von der Differenz zwischen den mittleren Leistungen des von dem schleifenartigen nichtlinearen Spiegel übertragenen und des reflektierten modulierten Solitonensignals.

4. Regenerator nach Anspruch 1, dadurch gekennzeichnet, daß die variable Frequenz der wenigstens einen der zwei Quellen durch eine optische Phasenkoppelschleife zur Phasenkopplung (29) des Schwebungssignals der zwei optischen Quellen (11, 12) an das Solitonensignal geregelt ist.

5. Regenerator nach einem der Ansprüche 1 bis 4, der ferner eine Quelle (30) mit gegenüber der Informationsfrequenz des Solitonensignals niedriger Frequenz, wobei das von der Quelle kommende Signal in das Steuersignal eingegeben wird, und Mittel zur synchronen Erfassung umfaßt.

6. Regenerator nach Anspruch 5, der einen Mischer (31), der die Mischung des von der Quelle (30) kommenden Signals mit dem der mittleren Leistung des modulierten Solitonensignals oder der Differenz der mittleren Leistungen entsprechenden Signals gewährleistet, und einen Filter (32) umfaßt, der die Tiefpaßfilterung des gemischten Signals gewährleistet.

7. Regenerator nach einem der Ansprüche 1 bis 6, dadurch gekennzeichnet, daß die zwei optischen Quellen Laserquellen sind, wobei die Frequenz der wenigstens einen der zwei Quellen geregelt ist durch Steuerung ihres Versorgungsstroms oder ihrer Solltemperatur.

8. Regenerator nach einem der Ansprüche 1 bis 7, dadurch gekennzeichnet, daß die Frequenz des Steuersignals gleich der halben Bitfrequenz des Solitonensignals ist.

9. Regenerator nach einem der Ansprüche 1 bis 7, dadurch gekennzeichnet, daß der schleifenartige nichtlineare optische Spiegel einen Eingangskoppler mit drei Eingängen (50) aufweist, und daß die Frequenz des Steuersignals gleich der Bitfrequenz des Solitonensignals ist.

10. Regenerator nach einem der Ansprüche 1 bis 9, dadurch gekennzeichnet, daß der schleifenartige nichtlineare optische Spiegel ein stark nichtlineares Medium umfaßt, wie etwa eine Chalkogenidfaser oder eine Faser mit germaniumdotiertem Kern.

11. Regenerator nach einem der Ansprüche 1 bis 10, dadurch gekennzeichnet, daß die Vorrichtung zur Erzeugung (5) des Steuersignals zwei Steuersignale mit entgegengesetzten Phasen liefert, die in den Spiegel an in Bezug auf einen Eingangskoppler (2) des Spiegels symmetrischen Positionen (6, 42) gekoppelt werden.

12. Verfahren zur Regenerierung mit hoher Rate eines Solitonensignals durch synchrone Modulation in einem schleifenartigen nichtlinearen Spiegel (3), gekennzeichnet durch die Erzeugung des Steuersignals durch Schwebung von zwei optischen Quellen (11,12), wobei die Frequenz von wenigstens einer der zwei Quellen variabel ist.

13. Verfahren nach Anspruch 12, dadurch gekennzeichnet, daß die variable Frequenz der wenigstens einen der zwei Quellen in Abhängigkeit von der mittleren Leistung des modulierten Solitonensignals geregelt wird.

14. Verfahren nach Anspruch 12, dadurch gekennzeichnet, daß die variable Frequenz der wenigstens einen der zwei Quellen in Abhängigkeit von der Differenz zwischen den mittleren Leistungen des von dem schleifenartigen nichtlinearen optischen Spiegel übertragenen und dem reflektierten modulierten Solitonensignals geregelt wird.

15. Verfahren nach Anspruch 12, dadurch gekennzeichnet, daß die variable Frequenz der wenigstens einen der zwei Quellen durch eine optische Phasenkopplungsschleife (29) zur Phasenkopplung des Schwebungssignals der zwei optischen Quellen (11, 12) an das Solitonensignal geregelt wird.

16. Verfahren nach einem der Ansprüche 12 bis 15, bei dem in das Steuersignal ein Signal mit einer gegenüber der Informationsfrequenz des Solitonensignals niedrigen Frequenz eingespeist und eine synchrone Erfassung durchgeführt wird.

17. Verfahren nach einem der Ansprüche 12 bis 16, dadurch gekennzeichnet, daß die zwei optischen Quellen Laserquellen sind, und daß die Frequenz der wenigstens einen der zwei Quellen geregelt wird durch Steuern ihres Versorgungsstroms oder ihrer Solltemperatur.

18. Verfahren nach einem der Ansprüche 12 bis 17, dadurch gekennzeichnet, daß die Frequenz des Steuersignals gleich der halben Bitfrequenz des Solitonensignals ist.

19. Verfahren nach einem der Ansprüche 12 bis 17, dadurch gekennzeichnet, daß der schleifenartige nichtlineare optische Spiegel einen Eingangskoppler (50) mit drei Eingängen aufweist, wobei die Frequenz des Steuersignals gleich der Bitfrequenz des Solitonensignals ist.

20. Verfahren nach einem der Ansprüche 12 bis 19, dadurch gekennzeichnet, daß der schleifenartige nichtlineare optische Spiegel ein stark nichtlineares Medium wie etwa eine Chalkogenidfaser oder eine Faser mit germaniumdotiertem Kern umfaßt.

21. Verfahren nach einem der Ansprüche 12 bis 20, dadurch gekennzeichnet, daß zwei Steuersignale mit entgegengesetzten Phasen in den Spiegel an in Bezug auf einen Eingangskoppler (2) des Spiegels symmetrischen Positionen (6, 42) gekoppelt werden.
